# EUROPÄISCHE PATENTSCHRIFT

(11) **EP 3 785 350 B1**
(45) Veröffentlichungstag und Bekanntmachung des Hinweises auf die Patenterteilung: **18.02.2026**
(21) Anmeldenummer: 19712973.7
(22) Anmeldetag: 20.03.2019
(51) Int. Cl.: H02K 1/2791

(54) **RÜCKSCHLUSSRING UND ELEKTRISCHER AUSSENLÄUFERMOTOR**
FLUX RETURN RING AND ELECTRICAL EXTERNAL ROTOR MOTOR
BAGUE DE REFLUX ET MOTEUR ÉLECTRIQUE À INDUIT EXTÉRIEUR

(30) Priorität: 25.04.2018 DE 102018109993
(43) Veröffentlichungstag der Anmeldung: 03.03.2021
(73) Patentinhaber: Siemens Aktiengesellschaft, 80333 München (DE)
(72) Erfinder: FEHRENBACH, Johannes, 78089 Unterkirnach (DE); KRIGER, Elizaveta, 78647 Trossingen (DE); ROMBACH, Volker, 78120 Furtwangen (DE)
(74) Vertreter: Siemens Patent Attorneys
(86) Internationale Anmeldenummer: PCT/EP2019/056969
(87) Internationale Veröffentlichungsnummer: WO 2019/206527

(56) Entgegenhaltungen:
- WO-A2-2009/106569
- WO-A2-2015/018402
- JP-A- 2005 020 892
- US-B1- 6 396 190

## Beschreibung

Die Erfindung betrifft einen Rückschlussring für einen elektrischen Außenläufermotor sowie den elektrischen Außenläufermotor mit einem derartigen Rückschlussring.

Bei elektrischen Motoren bzw. Maschinen werden Rückschlussringe eingesetzt, um die gesamte magnetische Kraft von Permanentmagneten auszunutzen. Motoren mit Rückschlussringen bzw. Rückschlussringe sind beispielsweise aus den Dokumenten WO 2009/106569 A2 und US 6,396,190 B1 bekannt. Rückschlussringe werden meist aus ferromagnetischem Werkstoff hergestellt, insbesondere aus Eisen. Im Stand der Technik sind Ausführungen sowohl aus einem Stück als auch aus mehreren Blechen bekannt. Bei Innenläufer-Elektromotoren werden die Permanentmagnete am Rotor aufgenommen und durch eine umfängliche Blechgeometrie gehalten. Bei Außenläufer-Elektromotoren werden die Permanentmagneten radial innenseitig an dem Rückschlussring befestigt, wobei die Befestigung herkömmlicherweise durch Kleben oder zusätzliche Fixierelemente erfolgte. Die Nutzung von Kleber ist hinsichtlich des Verarbeitungsprozesses ungünstig und führt zu Verschmutzungen der Montagevorrichtungen. Die Verwendung von zusätzlichen Fixierelementen erhöht die Teilezahl, die Prozesskosten und den Montageaufwand.

Weiter ist auch ein Rückschlussring für einen elektrischen Außenläufer mit radial innenseitig in Umfangsrichtung des Rückschlussrings verteilt ausgebildeten Aufnahmen zur befestigenden Anordnung von jeweils einem Permanentmagneten aus der Schrift JP 2005 020 892 A bekannt.

Der Erfindung liegt deshalb die Aufgabe zugrunde, eine vereinfachte und kostengünstige Befestigungsmöglichkeit für Permanentmagnete an einem Rückschlussring für einen Außenläufermotor bereitzustellen.

Diese Aufgabe wird durch die Merkmalskombination gemäß Patentanspruch 1 gelöst.

Erfindungsgemäß wird ein Rückschlussring für einen elektrischen Außenläufermotor mit radial innenseitig in Umfangsrichtung des Rückschlussrings verteilt ausgebildeten Aufnahmen zur befestigenden Anordnung von jeweils einem Permanentmagneten vorgeschlagen. Jede der Aufnahmen weist mindestens einen integral an dem Rückschlussring ausgebildeten Biegeschenkel auf, der zumindest elastisch in Umfangsrichtung biegbar ist. Durch die elastische Biegbarkeit ist der mindestens eine Biegeschenkel ausgebildet, zur Befestigung des in der jeweiligen Aufnahme anordenbaren Permanentmagneten eine Klemmkraft auf den jeweiligen Permanentmagneten auszuüben.

Die Aufnahmen weisen eine im Wesentlichen der Permanentmagnetform entsprechende Form auf, so dass jeweils ein Permanentmagnet in jeweils eine Aufnahme eingesetzt wird. Die Permanentmagneten sind vorzugsweise im Wesentlichen quaderförmig. Die Biegeschenkel an den jeweiligen Aufnahmen können beim Einsetzen des jeweiligen Permanentmagneten in die jeweilige Aufnahme elastisch in Umfangsrichtung gebogen werden, so dass sie auf die Permanentmagneten im eingesetzten Zustand eine dauerhafte Klemmkraft ausüben und die Permanentmagneten in den Aufnahmen fixieren. Die Biegeschenkel sind hierzu vorzugsweise an einem Umfangsrand der jeweiligen Aufnahme angeordnet und erzeugen eine Klemmkraft in Umfangsrichtung gegen eine in Umfangsrichtung weisende Seitenfläche des jeweiligen Permanentmagneten. Neben der elastischen Biegung können die Biegeschenkel zusätzlich auch plastisch verformbar sein, wobei die Biegeschenkel beim Einsetzen des jeweiligen Permanentmagneten neben der elastischen Klemmkraft auch eine durch die plastische Verformung bedingte Presspassung in der jeweiligen Aufnahme erfahren.

Durch die integrale Anordnung der Biegeschenkel direkt am Rückschlussring werden keine zusätzlich zu montierenden Fixierelemente benötigt. Die Permanentmagnete sind erfindungsgemäß nur durch die Klemmkraft bzw. Presspassung ohne Verklebung an dem Rückschlussring fixierbar.

In einer vorteilhaften Ausführungsvariante ist vorgesehen, dass die Aufnahmen und der mindestens eine Biegeschenkel einstückig an dem Rückschlussring ausgebildet sind. Der Rückschlussring ist vorzugsweise aus Elektroblech gebildet, wobei die Biegeschenkel und die Aufnahmen in einem Stanzprozess an dem Rückschlussring einstückig ausgebildet bzw. ausgestanzt werden.

Eine Weiterbildung des Rückschlussrings sieht vor, dass jede der Aufnahmen mehrere in Axialrichtung in einem vorbestimmten Abstand beabstandete Biegeschenkel aufweist, die jeweils eine Klemmposition bestimmen. Der jeweilige Permanentmagnet wird dadurch entlang seiner Axialerstreckung an mehreren Klemmpositionen fixiert. Zudem wird ermöglicht, dass innerhalb des jeweiligen Abstands jeweils ein Blechpaket aus gestapelten Blechlamellen angeordnet ist. Somit wechseln sich Klemmpositionen und Blechpakete entlang der Axialerstreckung der Permanentmagnete ab.

Bei einer Ausführungsvariante des Rückschlussrings ist der mindestens eine Biegeschenkel in Umfangsrichtung begrenzungsfrei auslenkbar. Es sind mithin keine geometrischen Einschränkungen für den Permanentmagneten gegeben. Auch können Abweichungen in den Abmessungen der Permanentmagnete ausgeglichen werden.

Ferner ist ein Ausführungsbeispiel des Rückschlussrings günstig, bei dem die Aufnahmen auf ihrer nach radial innen gerichteten Seite, d.h. zur Rotationsachse hin, offen sind, so dass der jeweils in die Aufnahme eingesetzte Permanentmagnet auf der radialen Innenseite bedeckungsfrei an dem Rückschlussring befestigbar ist. Gegenüber Lösungen mit geschlossenen Einsteckkammern für die jeweiligen Permanentmagnete begünstigt dies eine erhöhte Leistung sowie Wärmeableitung.

Der Rückschlussring sieht in einer Weiterbildung vor, dass die Aufnahmen auf zumindest einer Umfangsseite jeweils mindestens einen Anschlag aufweisen, an dem der jeweilige Permanentmagnet zur Anlage bringbar ist. Dabei ist vorteilhaft, wenn sich bei den Aufnahmen jeweils ein Anschlag und jeweils ein Biegeschenkels jeweils in Umfangsrichtung gegenüberliegen. Die Abstützung bzw. Einpressung der Permanentmagnete erfolgt somit an den jeweils gleichen axialen Klemmpositionen. Jeder Anschlag kann als einseitige positionsfeste Abstützung verwendet werden, um den Permanentmagneten in seine Fixierposition zu bringen, wobei der Permanentmagnet zunächst an die Abstützung gedrückt und anschließend gegen den oder die zur Erreichung der fixierenden Klemmung vorgesehenen Biegeschenkel gepresst wird. Die Biegeschenkel bewegen sich dabei in Umfangsrichtung weg von der jeweiligen Aufnahme und üben anschließend eine Klemmkraft auf den jeweiligen Permanentmagneten aus.

In einer weiteren Ausführungsform des Rückschlussrings liegen zumindest ein Biegeschenkel und zumindest ein Anschlag in Axialrichtung aneinander an, wobei der mindestens eine Biegeschenkel relativ gegenüber dem zumindest einen Anschlag in Umfangsrichtung beweglich biegbar ist. Hierdurch ist ein kompakter Aufbau gewährleistet, bei dem der jeweilige Anschlag für einen Permanentmagneten und der jeweilige Biegeschenkel für den in Umfangsrichtung angrenzenden Permanentmagneten auf einer Achse angeordnet sind. Die Zwischenräume zwischen den jeweils in Umfangsrichtung angrenzenden Permanentmagneten finden somit ausschließlich für die Fixierung der Permanentmagnete sowie die Blechpakete Verwendung.

Eine Weiterbildung der Erfindung sieht vor, dass der Rückschlussring im Bereich der Aufnahme eine radiale Einsenkung aufweist, deren Innenwände jeweils eine Anlagefläche für eine zumindest abschnittsweise formschlüssige Integration des jeweiligen Permanentmagneten in den Rückschlussring bilden. Die Einsenkung lässt zu, dass die Permanentmagneten radial tiefer eingesetzt werden können und bereits eine Vorfixierung durch die umlaufenden Wände der Einsenkung erfahren.

Erfindungsgemäß weist der mindestens eine Biegeschenkel an seinem freien nach radial innen weisenden Ende einen zur jeweiligen Aufnahme weisenden Vorsprung auf. Hierdurch kann die Klemmkraft auf die Permanentmagneten vergrößert und die Eingriffsposition des jeweiligen Biegeschenkels an dem jeweiligen Permanentmagneten festgelegt werden. Dabei können die Permanentmagneten zudem an ihren in Umfangsrichtung weisenden Seitenwänden Rastmittel, beispielsweise in Form einer Einkerbung umfassen, in die der jeweilige Vorsprung des Biegeschenkels eingreift.

Zur freien Beweglichkeit des jeweiligen Biegeschenkels ist in einer günstigen Ausführung vorgesehen, dass in dem Rückschlussring in Umfangsrichtung angrenzend an den mindestens einen Biegeschenkel eine radiale Aussparung vorgesehen ist. Die Aussparung erstreckt sich vorzugsweise in radialer Richtung über eine Auflagefläche des Rückschlussrings für den jeweiligen Permanentmagneten hinaus.

Soweit die Permanentmagneten nicht über eine plastische Presspassung gehalten werden, sondern nur über die elastische Klemmkraft des mindestens einen Biegeschenkels, ist bei dem Rückschlussring zudem vorteilhaft, dass der mindestens eine Biegeschenkel eine lösbare Befestigung für den jeweiligen Permanentmagneten gewährleistet.

Die Erfindung umfasst zudem einen elektrischen Außenläufermotor mit einem vorstehend beschriebenen Rückschlussring in einem Rotor.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: einen Ausschnitt eines Rückschlussrings eines ersten Ausführungsbeispiels in einer seitlichen Schnittansicht;
- Fig. 2: einen Ausschnitt eines Rückschlussrings eines zweiten Ausführungsbeispiels in einer perspektivischen Ansicht.

Gleiche Bezugszeichen benennen gleiche Teile in allen Ansichten.

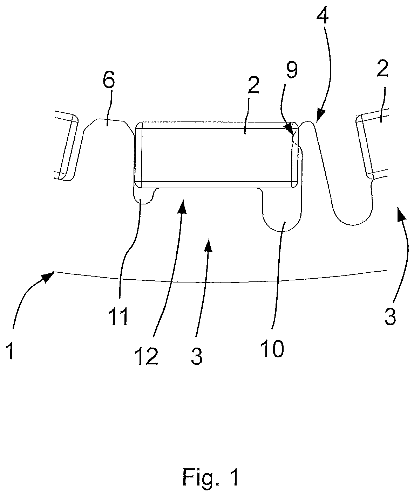

In Figur 1 ist ein Ausschnitt eines geblechten Rückschlussrings 1 eines Rotors eines elektrischen Außenläufermotors in einem ersten Ausführungsbeispiel in einer seitlichen Schnittansicht dargestellt. An dem Rückschlussring 1 ist radial innenseitig in Umfangsrichtung verteilt eine Vielzahl von Aufnahmen 3 zur befestigenden Anordnung von Permanentmagneten 2 ausgebildet. Figur 1 zeigt im Wesentlichen eine Aufnahme 3 mit einem darin fixierten Permanentmagneten 2, wobei die sich in Umfangsrichtung anschließenden und umlaufend jeweils in gleicher Weise ausgebildeten Aufnahmen 3 ebenfalls angedeutet, jedoch teilweise geschnitten sind. Am Umfangsrand jeder der Aufnahmen 3 ist auf einer Seite jeweils einstückig an dem Rückschlussring 1 ein Anschlag 6 ausgebildet, an dem der jeweilige Permanentmagnet 2 seitlich zur Anlage gebracht wird. Auf der in Umfangsrichtung der jeweiligen Aufnahme 3 gegenüber liegenden Seite ist zudem ein integral an und einstückig durch den Rückschlussring 1 ausgebildeter Biegeschenkel 4 vorgesehen, der den Permanentmagneten 2 in der jeweiligen Aufnahme 3 fixiert. Der Biegeschenkel 4 weist an seinem freien radialen Ende einen in Umfangsrichtung vorstehenden Vorsprung 9 auf, der an der Seitenwand des Permanentmagneten 2 eingreift. Zur Fixierung des Permanentmagneten 2 wird dieser aus radialer Richtung in die Aufnahme 3 gegen den Anschlag 6 gedrückt, wobei der Biegeschenkel 4 teilelastisch und teilplastisch in Umfangsrichtung nach außen gedrückt wird, um anschließend eine dauerhafte elastische Klemmkraft auf den Permanentmagneten 2 auszuüben. Zudem wird der Permanentmagnete 2 durch die teilplastische Verformung des Biegeschenkels 4 in einer Art Presspassung gehalten. Jede der Aufnahmen 3 weist einen Sockel 12 zur Auflage des Permanentmagneten 2 auf. Daran und an den Biegeschenkel 4 bzw. den Anschlag 6 sind in Umfangsrichtung angrenzend in dem Rückschlussring 1 die radialen Aussparungen 10, 11 vorgesehen, über die zum einen eine Beweglichkeit des Biegeschenkels 4, zum anderen eine ausreichende Wärmableitung gewährleistet wird. Die an den Biegeschenkel 4 angrenzende Aussparung 10 ist in Radialrichtung tiefer als die an den Anschlag 6 angrenzende Aussparung 11. Der Biegeschenkel 4 ist zudem in Umfangsrichtung durch Bereitstellung eines rückseitigen Freiraums begrenzungsfrei auslenkbar.

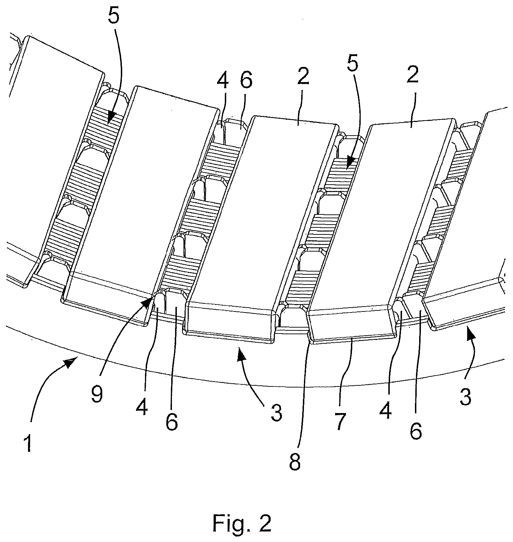

Figur 2 zeigt eine alternative Ausführung des geblechten Rückschlussrings 1, bei dem ebenfalls in Umfangsrichtung verteilt eine Vielzahl von Aufnahmen 3 zur Befestigung von Permanentmagneten 2 ausgebildet ist. Soweit nicht als anders beschrieben, stimmen die Merkmale mit dem Ausführungsbeispiel aus Figur 1 überein und werden zur Vermeidung von Wiederholungen nicht nochmals im Detail erläutert. In der perspektivischen Ansicht gemäß Figur 2 ist gut zu erkennen, dass jede der Aufnahmen 3 jeweils vier in axialer Richtung beabstandeten Befestigungsschenkel 4 und vier in Umfangsrichtung jeweils gegenüber liegende Anschläge 6 aufweist. Die Befestigungsschenkel 4 klemmen den jeweiligen Permanentmagneten 2 innerhalb der Aufnahme 3 gegen die gegenüberliegenden Anschläge 6. Zwischen den jeweils in Axialrichtung zueinander positionierten Befestigungsschenkeln 4 ist jeweils ein gleicher vorbestimmter Abstand vorgesehen, innerhalb dessen jeweils ein Blechpaket 5 aus gestapelten Blechlamellen angeordnet ist. Die Anschläge 6 erstrecken sich plattenförmig zwischen den Aufnahmen 3 und bieten für die jeweils unmittelbar angrenzenden Biegeschenkel 4 eine axiale Anlagefläche, entlang derer die Biegeschenkel 4 geführt in Umfangsrichtung elastisch beweglich sind. Somit interagieren die Befestigungsschenkel 4 der einen Aufnahme 3 mit den Anschlägen 6 der jeweils in Umfangsrichtung benachbarten Aufnahme 3. Auch in der Ausführung gemäß Figur 2 kann vorgesehen werden, dass die Biegeschenkel 4 beim Einsetzen der Permanentmagnete 2 zum Teil plastisch verformt werden und mithin eine Art Presspassung bieten.

Jede der Aufnahmen 3 des Rückschlussrings 1 weist jeweils eine radiale wannenartige und im Querschnitt U-förmige Einsenkung 7 auf, in der der im Wesentlichen quaderförmige Permanentmagnet 2 formschlüssig eingesetzt gehalten ist. Die Einsenkungen 7 bieten mit ihren Innenwänden 8 jeweils abschnittsweise eine Anlagefläche für den jeweiligen Permanentmagneten 2. Die Permanentmagneten 2 sind somit in Radialrichtung tiefer in den Rückschlussring 1 eingesetzt.

Auch wenn im Querschnitt der Figur 1 die Anordnung der Anschläge 6 und Befestigungsschenkel 4 in Axialrichtung nicht zu erkennen ist, wird diese vorzugsweise in einer Anordnung und Ausführung gemäß Figur 2 vollzogen. Auch werden entsprechende Blechpakete 5 in der Ausführung gemäß Figur 1 an dem Rückschlussring 1 positioniert.

Figur 2 stellt einen Rotor aus Rückschlussring 1 und Permanentmagneten 2 für einen elektrischen Außenläufermotor dar, der in den Figuren nicht gezeigt ist.

Nicht gezeigt ist eine alternative Ausführungsvariante, bei der die Biegeschenkel 3 an der Aufnahme 3 angeordnet und alternierend ausgerichtet sind, so dass sie von zwei gegenüberliegenden Seiten zu dem in der jeweiligen Aufnahme 3 angeordneten Permanentmagneten 2 bewegbar sind. Das bedeutet, dass die jeweils nebeneinander liegenden Biegeschenkel 3 nicht wie in Figur 2 in die jeweils selbe, sondern in jeweils unterschiedliche Umfangsrichtungen weisen und den Permanentmagneten 2 von zwei Seiten klemmen. Auch ist als Variante umfasst, die Biegeschenkel 3 an der einen Aufnahme 3 in die eine Umfangsrichtung auszurichten und bei der in Umfangsrichtung anschließenden Aufnahme 3 in die entsprechend entgegengesetzte Umfangsrichtung auszurichten. Die Anschläge 6 werden dann entsprechend weiterhin gegenüberliegend positioniert.

## Patentansprüche

1. Rückschlussring (1) für einen elektrischen Außenläufermotor mit radial innenseitig in Umfangsrichtung des Rückschlussrings (1) verteilt ausgebildeten Aufnahmen (3) zur befestigenden Anordnung von jeweils einem Permanentmagneten (2), wobei jede der Aufnahmen (3) mindestens einen integral an dem Rückschlussring (1) ausgebildeten Biegeschenkel (4) aufweist, der zumindest elastisch in Umfangsrichtung biegbar und dadurch ausgebildet ist, zur Befestigung des in der jeweiligen Aufnahme (3) anordenbaren Permanentmagneten (2) eine Klemmkraft auf den jeweiligen Permanentmagneten (2) auszuüben, **dadurch gekennzeichnet, dass** der mindestens eine Biegeschenkel (4) an seinem freien nach radial innen weisenden Ende einen zur jeweiligen Aufnahme (3) weisenden Vorsprung (9) aufweist, der an der Seitenwand des Permanentmagneten (2) eir reift.

2. Rückschlussring nach Anspruch 1, **dadurch gekennzeichnet, dass** die Aufnahmen (3) und der mindestens eine Biegeschenkel (4) einstückig an dem Rückschlussring (1) ausgebildet sind.

3. Rückschlussring nach einem der vorigen Ansprüche, **dadurch gekennzeichnet, dass** jede der Aufnahmen (3) mehrere in Axialrichtung in einem vorbestimmten Abstand beabstandete Biegeschenkel (4) aufweist, die jeweils eine Klemmposition bilden.

4. Rückschlussring nach dem vorigen Anspruch, **dadurch gekennzeichnet, dass** innerhalb des jeweiligen Abstands zwischen den Biegeschenkeln (4) jeweils ein Blechpaket (5) aus gestapelten Blechlamellen angeordnet ist.

5. Rückschlussring nach einem der vorigen Ansprüche, **dadurch gekennzeichnet, dass** der mindestens eine Biegeschenkel (4) in Umfangsrichtung begrenzungsfrei auslenkbar ist.

6. Rückschlussring nach einem der vorigen Ansprüche, **dadurch gekennzeichnet, dass** die Aufnahmen (3) auf ihrer nach radial innen gerichteten Seite offen sind, so dass der jeweilige Permanentmagnet (2) auf der radialen Innenseite bedeckungsfrei an dem Rückschlussring (1) befestigbar ist.

7. Rückschlussring nach einem der vorigen Ansprüche, **dadurch gekennzeichnet, dass** die Aufnahmen (3) auf zumindest einer Umfangsseite jeweils mindestens einen Anschlag (6) aufweisen, an dem der jeweilige Permanentmagnet (2) zur Anlage bringbar ist.

8. Rückschlussring nach dem vorigen Anspruch, **dadurch gekennzeichnet, dass** sich bei den Aufnahmen (3) jeweils ein Anschlag (6) und jeweils ein Biegeschenkels (4) jeweils in Umfangsrichtung gegenüberliegen.

9. Rückschlussring nach einem der vorigen Ansprüche, **dadurch gekennzeichnet, dass** die Aufnahmen (3) zwischen dem mindestens einen Biegeschenkel (4) und dem mindestens einen Anschlag (6) jeweils eine Presspassung für den jeweiligen Permanentmagneten (2) bieten.

10. Rückschlussring nach einem der vorigen Ansprüche, **dadurch gekennzeichnet, dass** zumindest ein Biegeschenkel (4) und zumindest ein Anschlag (6) in Axialrichtung aneinander anliegen, wobei der mindestens eine Biegeschenkel (4) relativ gegenüber dem zumindest einen Anschlag (6) in Umfangsrichtung beweglich biegbar ist.

11. Rückschlussring nach einem der vorigen Ansprüche, **dadurch gekennzeichnet, dass** der Rückschlussring (1) im Bereich der Aufnahmen (3) jeweils eine radiale Einsenkung (7) aufweist, deren Innenwände (8) jeweils eine Anlagefläche für eine zumindest abschnittsweise formschlüssige Integration des jeweiligen Permanentmagneten (2) in den Rückschlussring (1) bilden.

12. Rückschlussring nach einem der vorigen Ansprüche, **dadurch gekennzeichnet, dass** in dem Rückschlussring (1) in Umfangsrichtung angrenzend an den mindestens einen Biegeschenkel (4) eine radiale Aussparung (10) vorgesehen ist.

13. Rückschlussring nach einem der vorigen Ansprüche, **dadurch gekennzeichnet, dass** der mindestens eine Biegeschenkel (4) eine lösbare Befestigung für den jeweiligen Permanentmagneten (2) gewährleistet.

14. Rückschlussring nach einem der vorigen Ansprüche, **dadurch gekennzeichnet, dass** mehrere Biegeschenkel (3) an der Aufnahme (3) angeordnet und alternierend in Umfangsrichtung ausgerichtet sind, so dass sie von zwei gegenüberliegenden Seiten zu dem in der jeweiligen Aufnahme (3) anordenbaren Permanentmagneten (2) beweglich sind.

15. Elektrischer Außenläufermotor mit einem Rückschlussring (1) gemäß einem der vorigen Ansprüche.

## Claims

1. Flux return ring (1) for an electrical external rotor motor with recesses (3) embodied such that they are distributed radially on the inner side in the peripheral direction of the flux return ring (1) for the fastening arrangement of a permanent magnet (2) in each case, wherein each of the recesses (3) has at least one bending limb (4), which is embodied in an integral manner on the flux return ring (1), is embodied as at least being bendable in an elastic manner in the peripheral direction and, for fastening of the permanent magnet (2) that can be arranged in the respective recess (3), is embodied so as to exert a clamping force on the respective permanent magnet (2), **characterised in that** the at least one bending limb (4), on its free end pointing radially inwards, has a protrusion (9) which faces towards the respective recess (3) and engages on the side wall of the permanent magnet (2).

2. Flux return ring according to claim 1, **characterised in that** the recesses (3) and the at least one bending limb (4) are embodied in one piece on the flux return ring (1).

3. Flux return ring according to one of the preceding claims, **characterised in that** each of the recesses (3) has multiple bending limbs (4) spaced apart by a predetermined distance in the axial direction, which form a clamping position in each case.

4. Flux return ring according to the preceding claim, **characterised in that** a laminated core (5) of stacked sheet metal blades is arranged in each case within the respective distance between the bending limbs (4).

5. Flux return ring according to one of the preceding claims, **characterised in that** the at least one bending limb (4) can be deflected without restriction in the peripheral direction.

6. Flux return ring according to one of the preceding claims, **characterised in that** the recesses (3) are open on their side directed radially inwards, so that the respective permanent magnet (2) on the radial inner side can be fastened to the flux return ring (1) without coverage.

7. Flux return ring according to one of the preceding claims, **characterised in that** the recesses (3), on at least one peripheral side, in each case have at least one end stop (6), with which the respective permanent magnet (2) can be brought into contact.

8. Flux return ring according to the preceding claim, **characterised in that**, for the recesses (3), in each case an end stop (6) and in each case a bending limb (4) lie opposite in the peripheral direction in each case.

9. Flux return ring according to one of the preceding claims, **characterised in that** the recesses (3) between the at least one bending limb (4) and the at least one end stop (6) in each case offer an interference fit for the respective permanent magnet (2).

10. Flux return ring according to one of the preceding claims, **characterised in that** at least one bending limb (4) and at least one end stop (6) abut one another in the axial direction, wherein the at least one bending limb (4) can bend such that it can move relative to the at least one end stop (6) in the peripheral direction.

11. Flux return ring according to one of the preceding claims, **characterised in that** the flux return ring (1), in the region of the recesses (3), in each case has a radial depression (7), the inner walls (8) of which in each case form a contact area for an integration with a positive fit, at least in sections, of the respective permanent magnet (2) into the flux return ring (1).

12. Flux return ring according to one of the preceding claims, **characterised in that** a radial cutout (10) is provided in the flux return ring (1), adjacent to the at least one bending limb (4) in the peripheral direction.

13. Flux return ring according to one of the preceding claims, **characterised in that** the at least one bending limb (4) ensures a detachable fastening for the respective permanent magnet (2).

14. Flux return ring according to one of the preceding claims, **characterised in that** multiple bending limbs (3) are arranged on the recess (3) and are arranged in an alternating manner in the peripheral direction, so that they can move from two opposite sides to the permanent magnet (2) that can be arranged in the respective recess (3).

15. Electrical external rotor motor with a flux return ring (1) according to one of the preceding claims.

## Revendications

1. Bague (1) de reflux pour un moteur électrique à induit extérieur comprenant des logements (3) répartis du côté intérieur radialement dans la direction périphérique de la bague (1) de reflux pour le montage à fixation de respectivement un aimant (2) permanent, dans laquelle chacun des logements (3) a au moins une branche (4) de flexion, qui est constituée d'une pièce avec la bague (1) de reflux, qui peut fléchir au moins élastiquement dans la direction périphérique et qui est constituée pour appliquer, pour la fixation de l'aimant (2) permanent pouvant être mis dans chaque logement (3), une force de serrage sur l'aimant (2) permanent respectif, **caractérisée en ce que** la au moins une branche (4) de flexion a, à son extrémité libre tournée vers l'intérieur radialement, une saillie (9), qui est tournée vers le logement (3) respectif et qui pénètre dans la paroi latérale de l'aimant (2) permanent.

2. Bague de reflux suivant la revendication 1, **caractérisée en ce que** les logements (3) et la au moins une branche (4) de flexion sont constitués d'une seule pièce sur la bague (1) de reflux.

3. Bague de reflux suivant l'une des revendications précédentes, **caractérisée en ce que** chacun des logements (3) a plusieurs branches (4) de flexion à une distance axiale déterminée à l'avance dans la direction axiale, qui forment respectivement une position de serrage.

4. Bague de reflux suivant la revendication précédente, **caractérisée en ce que**, dans la distance respective entre les branches (4) de flexion, est monté respectivement un paquet (5) de tôles en lamelles de tôles empilées.

5. Bague de reflux suivant l'une des revendications précédentes, **caractérisée en ce que** la au moins une branche (4) de flexion peut être déviée sans limitation dans la direction périphérique.

6. Bague de reflux suivant l'une des revendications précédentes, **caractérisée en ce que** les logements (3) sont ouverts de leur côté dirigé vers l'intérieur radialement, de manière à pouvoir fixer, sans recouvrement à la bague (1) de reflux, l'aimant (2) permanent respectif sur la face intérieure radiale.

7. Bague de reflux suivant l'une des revendications précédentes, **caractérisée en ce que** les logements (3) ont, sur au moins une face périphérique, respectivement au moins une butée (6), sur laquelle l'aimant (2) permanent respectif peut venir en contact.

8. Bague de reflux suivant la revendication précédente, **caractérisée en ce que**, dans les logements (3), respectivement une butée (6) et respectivement une branche (4) de flexion sont en opposition respectivement dans la direction périphérique.

9. Bague de reflux suivant l'une des revendications précédentes, **caractérisée en ce que** les logements (3) offrent, entre la au moins une branche (4) de flexion et la au moins une butée (6), respectivement un ajustage serré pour l'aimant (2) permanent respectif.

10. Bague de reflux suivant l'une des revendications précédentes, **caractérisée en ce qu'**au moins une branche (4) de flexion et au moins une butée (6) s'appliquent l'une à l'autre dans la direction axiale, dans laquelle la au moins une branche (4) de flexion peut, d'une manière mobile dans la direction périphérique, se courber par rapport à la au moins une butée (6).

11. Bague de reflux suivant l'une des revendications précédentes, **caractérisée en ce que** la bague (1) de reflux a, dans la partie des logements (3), respectivement un renfoncement (7) radial, dont les parois (8) intérieures forment respectivement une surface de contact pour une intégration à complémentarité de forme, au moins par endroits, de l'aimant (2) permanent respectif dans la bague (1) de reflux.

12. Bague de reflux suivant l'une des revendications précédentes, **caractérisée en ce que**, dans la bague (1) de reflux, est prévu un évidement (10) radial, voisin dans la direction périphérique de la au moins une branche (4) de flexion.

13. Bague de reflux suivant l'une des revendications précédentes, **caractérisée en ce que** la au moins une branche (4) de flexion assure une fixation amovible de l'aimant (2) permanent respectif.

14. Bague de reflux suivant l'une des revendications précédentes, **caractérisée en ce que** plusieurs branches (3) de flexion sont disposées sur le logement (3) et sont orientées de manière alternée dans la direction périphérique, de manière à être mobiles de deux côtés opposés par rapport à l'aimant (2) permanent pouvant être mis dans le logement (3) respectif.

15. Moteur électrique à induit extérieur ayant une bague (1) de reflux suivant l'une des revendications précédentes.
